# EUROPEAN PATENT SPECIFICATION

(11) **EP 4 320 583 B1**
(45) Date of publication and mention of the grant of the patent: **10.12.2025**
(21) Application number: 22807734.3
(22) Date of filing: 09.05.2022
(51) Int. Cl.: G06Q 50/10, G06T 15/02, G06T 19/00, G06T 17/00, H04L 67/131, H04W 4/021, H04W 4/38

(54) **METHOD AND DEVICE FOR PROVIDING AUGMENTED REALITY (AR) SERVICE BASED ON VIEWER ENVIRONMENT**
VERFAHREN UND VORRICHTUNG ZUR BEREITSTELLUNG EINES DIENSTES FÜR ERWEITERTE REALITÄT AUF BASIS EINER BETRACHTERUMGEBUNG
PROCÉDÉ ET DISPOSITIF POUR FOURNIR UN SERVICE DE RÉALITÉ AUGMENTÉE (RA) REPOSANT SUR UN ENVIRONNEMENT DE SPECTATEUR

(30) Priority: 10.05.2021 KR 20210060030
(43) Date of publication of application: 14.02.2024
(73) Proprietor: Samsung Electronics Co., Ltd., Suwon-si, Gyeonggi-do 16677 (KR)
(72) Inventor: YANG, Hyunkoo, Suwon-si Gyeonggi-do 16677 (KR); YIP, Eric, Suwon-si Gyeonggi-do 16677 (KR); SONG, Jaeyeon, Suwon-si Gyeonggi-do 16677 (KR)
(74) Representative: Gulde & Partner
(86) International application number: PCT/KR2022/006551
(87) International publication number: WO 2022/240086

(56) References cited:
- US-A1- 2015 212 703
- US-A1- 2016 335 805
- US-A1- 2017 132 842
- US-A1- 2019 311 544
- US-A1- 2020 090 409
- US-A1- 2020 175 764
- US-A1- 2020 334 902

## Description

### [Technical Field]

The disclosure generally relates to a method and device for providing a service using augmented reality (AR) content.

### [Background Art]

5G mobile communication technologies define broad frequency bands such that high transmission rates and new services are possible, and can be implemented not only in "sub 6GHz" bands such as 3.5GHz, but also in "above 6GHz" bands referred to as mmWave including 28GHz and 39GHz. In addition, it has been considered to implement 6G mobile communication technologies (referred to as beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced mobile broadband (eMBB), ultra reliable low latency communications (URLLC), and massive machine-type communications (mMTC), there has been ongoing standardization regarding beamforming and massive multiple input multiple output (MIMO) for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (bandwidth part), new channel coding methods such as a LDPC (low density parity check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (vehicle-to-everything) for aiding driving determination by autonomous vehicles based on information regarding positions and states of vehicles transmitted by the vehicles and for enhancing user convenience, NR-U (new radio unlicensed) aimed at system operations conforming to various regulation-related requirements in unlicensed bands, NR user equipment (UE) power saving, non-terrestrial network (NTN) which is UE-satellite direct communication for providing coverage in an area in which communication with terrestrial networks is unavailable, and positioning.

Moreover, there has been ongoing standardization in air interface architecture/protocol regarding technologies such as industrial Internet of things (IIoT) for supporting new services through interworking and convergence with other industries, IAB (integrated access and backhaul) for providing a node for network service area expansion by supporting a wireless backhaul link and an access link in an integrated manner, mobility enhancement including conditional handover and DAPS (dual active protocol stack) handover, and two-step random access for simplifying random access procedures (2-step RACH for NR). There also has been ongoing standardization in system architecture/service regarding a 5G baseline architecture (for example, service based architecture or service based interface) for combining network functions virtualization (NFV) and software-defined networking (SDN) technologies, and mobile edge computing (MEC) for receiving services based on UE positions.

As 5G mobile communication systems are commercialized, connected devices that have been exponentially increasing will be connected to communication networks, and it is expected that enhanced functions and performances of 5G mobile communication systems and integrated operations of connected devices will be necessary. To this end, new research is scheduled in connection with eXtended reality (XR) for efficiently supporting AR, VR (virtual reality), MR (mixed reality) and the like, 5G performance improvement and complexity reduction by utilizing artificial intelligence (AI) and machine learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as full dimensional MIMO (FD-MIMO), array antennas and large-scale antennas, metamaterial-based lenses and antennas for improving coverage of terahertz band signals, high-dimensional space multiplexing technology using OAM (orbital angular momentum), and RIS (reconfigurable intelligent surface), but also full-duplex technology for increasing frequency efficiency of 6G mobile communication technologies and improving system networks, AI-based communication technology for implementing system optimization by utilizing satellites and AI from the design stage and internalizing end-to-end AI support functions, and next-generation distributed computing technology for implementing services at levels of complexity exceeding the limit of UE operation capability by utilizing ultra-high-performance communication and computing resources.

As communication technology develops, the demand for providing various devices and eXtended reality (XR) services is increasing. XR may include at least one of VR, AR, or MR. XR services may include, e.g., location-based service applications, XR calls based on XR objects configured in three dimension (3D), XR streaming, and the like. Here, "XR call" means a service in which 3D object creation and playback functions are added to general video and audio calls. "XR streaming" means a service that allows an XR device to receive XR content from a server and play it. AR is a technique that provides additional information difficult to obtain only in the real world by synthesizing virtual objects with the real world that the user sees. AR service may provide a plurality of virtual objects and may describe the physical relationship between virtual objects, using the scene description technique. The virtual object may be provided as a 3D model, and the AR service viewer may analyze the real world to determine a position (anchor) where to synthesize a 3D model and render a 3D model in the identified position.

Meanwhile, when the AR service viewer's environment is different from the environment assumed by the AR service provider when creating the 3D model, the 3D model cannot be played on the viewer's AR device or may be played in a different manner than is intended by the AR service provider.

US 2020/334902 Al discloses a method including accessing a digital map of a real-world region, where the digital map includes one or more three-dimensional meshes corresponding to one or more three-dimensional objects within the real-world region, receiving an object query including an identifier for an anchor in the digital map, positional information relative to the anchor, and information associated with a directional vector, determining a position within the digital map based on the identifier for the anchor and the positional information relative to the anchor, determining a three-dimensional mesh in the digital map that intersects with a projection of the directional vector from the determined position within the digital map, identifying metadata associated with the three-dimensional mesh, and sending the metadata to the second computing device.

US 2020/175764 Al discloses a method including acquiring, from a client device within a real-world environment, information representative of the real-world environment, and transmitting the information representative of the real-world environment to a relocalization service. The method may further include receiving, from the relocalization service, (1) an anchor point that may include a mapped position within the real-world environment, and (2) a determined position within the real-world environment of a client device relative to the mapped position of the anchor point. The method may further include sending an identifier of the anchor point to an asset management service, and obtaining, from the asset management service, a digital asset. The method may further include presenting the digital asset at a position within an artificial environment relative to the mapped position of the anchor point.

### [Disclosure]

### [Technical Problem]

To address the foregoing issues, an embodiment of the disclosure may provide a method and device by which an AR service provider may adapt to the AR service viewer's real world in real-time.

### [Technical Solution]

The present invention is defined by the appended set of claims. Preferred embodiments are defined by the dependent claims. According to an embodiment, a method for operating a terminal for an augmented reality (AR) service in a mobile communication system includes generating terminal anchoring metadata based on environment information obtained from at least one sensor included in the terminal, transmitting the terminal anchoring metadata to a server, receiving, from the server, a 3D model generated based on the terminal anchoring metadata, and rendering a virtual object based on the 3D model and the environment information.

According to an embodiment, a method for operating a server for an augmented reality (AR) service in a mobile communication system includes receiving, from a terminal, terminal anchoring metadata generated based on environment information obtained from at least one sensor included in the terminal, generating a 3D model using the terminal anchoring metadata, and transmitting the 3D model to the terminal. According to an embodiment, a virtual object may be rendered by the terminal based on the 3D model and the environment information.

According to an embodiment, a terminal for an augmented reality (AR) service in a mobile communication system includes a transceiver and a controller generating terminal anchoring metadata based on environment information obtained from at least one sensor included in the terminal, controlling to transmit the terminal anchoring metadata to a server, controlling to receive, from a server, a 3D model generated based on the terminal anchoring metadata, and rendering a virtual object based on the 3D model and the environment information.

According to an embodiment, a server for an augmented reality (AR) service in a mobile communication system includes a transceiver and a controller controlling to receive, from a terminal, terminal anchoring metadata generated based on environment information obtained from at least one sensor included in the terminal, generating a 3D model using the terminal anchoring metadata, and controlling to transmit the 3D model to the terminal. According to an embodiment, a virtual object may be rendered by the terminal based on the 3D model and the environment information.

### [Advantageous Effects]

An embodiment of the disclosure may provide an AR service provider which can adapt to the AR service viewer's real world in real-time.

### [Description of Drawings]

The above and other aspects, features, and advantages of certain embodiments of the disclosure will be more apparent from the following description taken in conjunction with the accompanying drawings, in which:
FIG. 1 illustrates a flowchart of an example of an AR service playback procedure;
FIG. 2 illustrates an example of an AR terminal's functional structure;
FIG. 3 illustrates an example of an AR terminal's functional structure according to an embodiment;
FIG. 4 illustrates a block diagram of an AR server's functional structure according to an embodiment;
FIG. 5 illustrates a flowchart of an AR service playback procedure based on terminal anchoring metadata;
FIG. 6 illustrates a flowchart of an AR service playback procedure based on content anchoring metadata;
FIG. 7 illustrates a block diagram of a structure of a terminal according to an embodiment; and
FIG. 8 illustrates a block diagram of a structure of a server according to an embodiment of the disclosure.

### [Mode for Invention]

Hereinafter, embodiments of the disclosure are described in detail with reference to the accompanying drawings. When determined to make the subject matter of the disclosure unclear, the detailed description of the known art or functions may be skipped. The terms as used herein are defined considering the functions in the disclosure and may be replaced with other terms according to the intention or practice of the user or operator. Therefore, the terms should be defined based on the overall disclosure.

Embodiments of the disclosure may also be applicable to communication systems with a similar technical background with minor changes without significantly departing from the scope of the disclosure, and this may be possible under the determination of those skilled in the art to which the disclosure pertains. As used herein, the term "communication system" encompasses broadcast systems, but when a broadcast service is a main service, the communication system may be clearly mentioned as broadcast system.

Advantages and features of the disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skilled in the art of the category of the disclosure. The disclosure is defined only by the appended claims. The same reference numeral denotes the same element throughout the specification.

Methods described below in connection with embodiments are based on hardware. However, embodiments of the disclosure encompass technology using both hardware and software and thus do not exclude software-based methods. The disclosure is not limited to the terms, and other terms equivalent in technical concept may also be used.

The 3D model for the AR service considered in the disclosure may be defined as a continuous volumetric frame that changes over time. The volumetric frame may be regarded as a set of primitive elements, such as points, lines, and planes, existing in a three-dimensional (3D) space at a specific time, and the primitive elements may have attributes, such as color, reflectance, and the like. The volumetric frames may be stored and transmitted in a format specialized for characteristics and applications of content. For example, the graphics language transmission format (GLTF) format spatially and logically structures and expresses a scene in a three-dimensional space. More specifically, the scene may be structured with nodes having a tree or graph structure and expressed in JavaScript object notation (JSON) format, and actual media data referenced by the node may be specified in the above-described raw element-based 3D model structure.

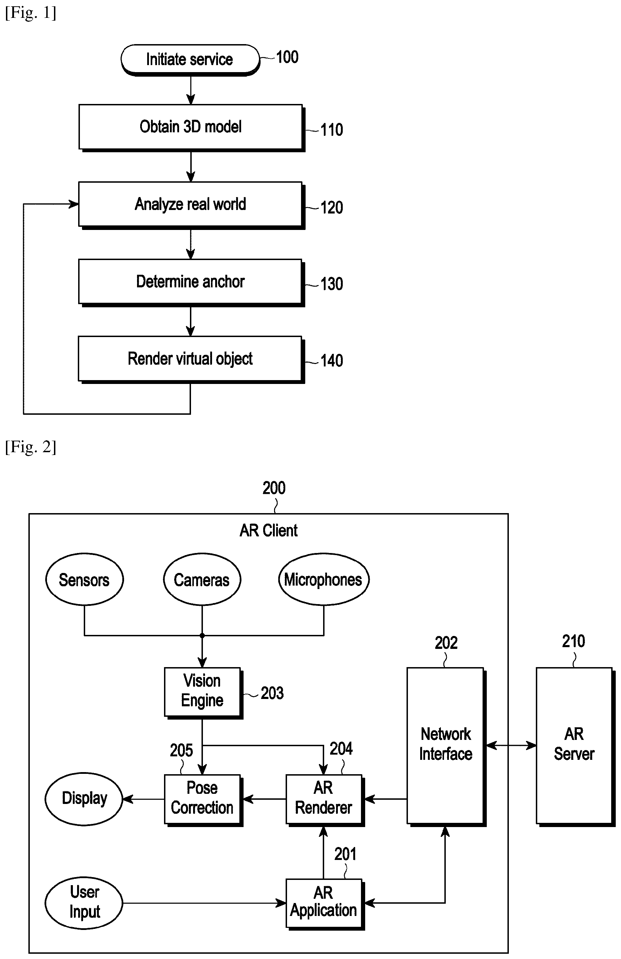

FIG. 1 illustrates a flowchart of a procedure for reproducing an AR service on an AR terminal.

Referring to FIG. 1, an AR terminal may initiate at step 100 an AR service by executing an application program (or application) and at step 110, obtain a 3D model constituting the AR service. The 3D model constituting the AR service is a part of the application program and may be present in the storage space of the AR terminal or be received from an AR server located over the network.

The AR terminal may determine at step 130 an anchor where the 3D model is located via real world analysis at step120 and at step 140, render a virtual object represented as the 3D model. The real world analysis includes a process in which the AR terminal recognizes the environment around the AR terminal using a sensor, e.g., a camera, and the anchor may be a geometrical structure referenced for synthesizing the 3D model with the real world context.

For example, in a service in which the user of the AR terminal in a room with a table is able to put a virtual object on the table, the real world analysis may be a process for figuring out the size of the room, the position and size of the table, and the process of determining the anchor may be a process for determining the position where the 3D model indicating the virtual object may be placed on the top surface of the table. Since the real world may be varied by the movement of the AR terminal or external factors, the position of the anchor may be changed, if necessary, by continuously performing the real world analysis after the virtual object rendering at step 140.

FIG. 2 illustrates an example of a functional structure of an AR terminal for playing the above-described AR service.

Referring to FIG. 2, the AR terminal 200 may include an AR application 201, a network interface 202, a vision engine 203, an AR renderer 204, and a pose correction 205 function.

According to an embodiment, the network interface 202 may be denoted as a communication interface or a transceiver. The AR application 201, the vision engine 203, the AR renderer 204, and the pose correction 205 function are collectively referred to as a controller or a processor.

The AR application 201 denotes a service logic that executes the AR service based on the user's input. The vision engine 203 may perform the real world analysis 120 of FIG. 1 based on data inputted from a device, e.g., a sensor, a camera, or a microphone, and generate data for anchor determination 130. The anchor determination 130 may be executed by the AR application using the 3D model and the data generated by the vision engine 203, and the AR application 201 may use user input during the anchor determination 130. The 3D model, as part of the AR application 201, may be stored in the AR terminal 200 and received from the AR server 210 through the network interface 202.

Meanwhile, for the above-described AR terminal to determine the anchor for rendering the virtual object, information on the 3D model representing the virtual object is required. For example, the user of the AR terminal may perform the application of placing a 3D model representing a piece of furniture, as a virtual object, in the room of the user of the AR terminal to determine a piece of furniture to purchase. The 3D model representing the piece of furniture in the application should be rendered to be recognized by the user of the AR terminal as having the same size as a real piece of furniture and, to that end, the anchor should be set in a position where there is an empty space sufficient to place the real piece of furniture. There may be a piece of furniture impossible to place depending on the structure of the room of the AR terminal user. In this case, the AR service may provide the AR terminal user with only 3D models for placeable furniture using terminal anchoring metadata, which is to be described below.

As another example, an application in which a virtual object is not placed in a fixed position but is movable in the real world of the AR terminal user may be performed. To correctly synthesize the virtual object with the AR terminal user's real world, information on the space necessary for representing the movement of the virtual object as well as information regarding the size of the virtual object is required. Accordingly, in this case, the AR service may transfer information on a movement range of the virtual object to the AR terminal using the content anchoring metadata which is to be described below.

The terminal anchoring metadata may include at least one of the geometry of the real world where the AR terminal is located, coordinate system, the display resolution of the user AR terminal, display resolution corresponding to the region of interest, the position and direction (or pose) of the user AR terminal, anchor position and attributes, and information on content processing required for anchoring. The geometry of the real world may be represented as a 3D model, and additional information may be specified as the attributes of the nodes constituting the 3D model depending on its application range.

Examples of the parameters constituting the above-described terminal anchoring metadata are as follows:
Geometry of the real world where the AR terminal is located: may be represented as a set of primitive elements, such as dots, lines, and planes, present on a 3D space and may further include information regarding an object if an object such as a desk or a chair is recognized;
- Coordinate system: The relationship between the coordinate system representing the geometry and the real coordinate system;
- Pose of the user AR terminal: The position and direction of the user AR terminal may be used when the AR server performs view frustum culling on the 3D model;
- Anchor position and attributes: The position of the anchor in the real world of the AR terminal or a candidate area where the anchor may be positioned may further include such attributes as anchor normal, geometric characteristics (horizontal plane, vertical plane, boundary plane, etc.), and information on real objects (next to a water cup, in a frame, etc.). The anchor position and attributes may be set based on requirements for content anchoring metadata described below, results of real world analysis, and user input;
- Content processing required for anchoring: The type of content processing required for anchoring the 3D model in the AR terminal's real world and parameters for the content processing. Examples of content processing may include scaling, rotation, and translation, and the processing is applicable to individual virtual objects or the entire scene constituted of virtual objects. The content processing may be set based on requirements for content anchoring metadata described below, results of real world analysis, and user input;
- Display resolution of user AR terminal: Resolution corresponding to the entire field of view (FoV) of the AR terminal may be used when setting the precision of the 3D model by the AR server; and
- Display resolution corresponding to the region of interest: The resolution of the display of the AR terminal corresponding to the region of interest of the AR terminal. The region of interest may be a region in which the geometry of the content anchoring metadata described below or the 3D model is to be rendered in the position of the anchor.

The terminal anchoring metadata may further include parameters defined in the content anchoring metadata in response to the content anchoring metadata described below.

The content anchoring metadata may include at least one of the space to be occupied by the scene representing the AR content, the space to be occupied by each of the virtual objects constituting the scene, anchor requirements, the frontal direction of the scene and virtual object, and possible content processing. The space to be occupied by the scene and the space to be occupied by each of the virtual objects constituting the scene may be represented as a 3D model, and additional information may be specified as the attributes of the nodes constituting the 3D model depending on its application range.

Examples of the parameters constituting the above-described content anchoring metadata are as follows:
- Space to be occupied by the scene: may be represented as a set of primitive elements, such as dots, lines, and planes, present on a 3D space;
- Space to be occupied by each of the virtual objects constituting the scene: may be represented as a set of primitive elements, such as dots, lines, and planes, present on a 3D space and may further include information for recognizing virtual objects (e.g., a desk or a chair);
- Anchor requirements: Requirements for locating the anchor may further include such attributes as anchor normal, geometric characteristics (horizontal plane, vertical plane, boundary plane, etc.), and information on real objects (next to a water cup, in a frame, etc.);
- Frontal direction of the scene and virtual object; and
- Possible content processing: The type of content processing that may be provided by the AR server to anchor the 3D model in the AR terminal's real world and parameters for the content processing. Examples of content processing may include scaling, rotation, and translation, and the processing is applicable to individual virtual objects or the entire scene constituted of virtual objects. Content processing may further include a range (e.g., maximum reduction ratio) allowed for each processing.

The space to be occupied by each of the virtual objects constituting the scene may be represented as a set of simple structures, e.g., boxes or cylinders, which may include virtual objects or precisely specify the outer shape of the actual virtual object. The space to be occupied by the scene may also be represented as a set of simple structures, e.g., boxes or cylinders, which may include the scene or precisely specify the area to be occupied by the scene.

Each of the terminal anchoring metadata and the content anchoring metadata may be created, stored, transmitted, and processed in the format of, e.g., JSON, binary object, or XML and, according to an implementation, the terminal anchoring metadata and the content anchoring metadata may be created, stored, transmitted, and processed, as a single data unit. Further, the terminal anchoring metadata and the content anchoring metadata may be created, stored, transmitted, and processed as the same or separate file from the 3D model for AR service and, when present as a separate file, the AR service provider may provide a signaling method in which the AR terminal user may associate the 3D model with the terminal anchoring metadata and content anchoring metadata. Examples of the signaling method may include an electric service guide (ESG), a user service description, and service access information (SAI) of 3GPP 5G media streaming (5GMS).

The terminal anchoring metadata and the content anchoring metadata may be shared, in the form of an HTTP resource, between the AR terminal and the AR server or may be transmitted between the AR terminal and the AR server through a separate control protocol or media transport protocol.

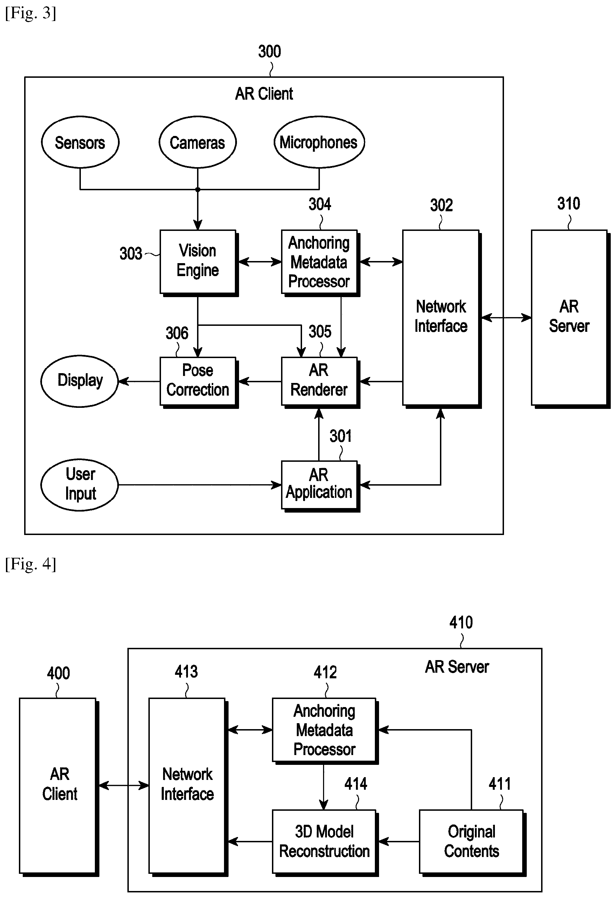

FIG. 3 illustrates an example of an AR terminal's functional structure according to an embodiment.

Referring to FIG. 3, an AR terminal 300 may include an AR application 301, a network interface 302, a vision engine 303, an anchoring metadata processor 304, an AR renderer 305, and a pose correction 306 function. Referring to FIGS. 2 and 3, the AR terminal 300 of FIG. 3 is characterized to further include the anchoring metadata processor 304 as compared with the AR terminal 200 of FIG. 2.

The network interface 302 may be referred to as a communication interface or a transceiver. The AR application 301, the vision engine 303, the anchoring metadata processor 304, the AR renderer 305, and the pose correction 306 function are collectively referred to as a controller or a processor.

The following are examples of the functions of the anchoring metadata processor 304 shown in FIG. 3:
- Generation of terminal anchoring metadata: generates the above-described terminal anchoring metadata using information on the real world of the AR terminal processed by the vision engine 303. In this case, the above-described terminal anchoring metadata may be visualized to the AR user using the AR renderer 305, and detailed parameters may be determined using user input information.
- Content anchoring metadata processing: analyzes the real world and generates control information for anchor identification by processing the content anchoring metadata received from the AR server. Further, terminal anchoring metadata reflecting the results of anchor identification and the real world analysis may be generated and transferred to the AR server 310. In this case, the above-described content anchoring metadata and terminal anchoring metadata may be visualized to the AR user using the AR renderer 305, and detailed parameters may be determined using user input information.

FIG. 4 illustrates a block diagram of an AR server's functional structure according to an embodiment.

Referring to FIG. 4, an AR server 410 may include original contents 411, an anchoring metadata processor 412, a network interface 413, and a 3D model reconstruction 414 function.

The network interface 413 may be referred to as a communication interface or a transceiver. The original contents 411, anchoring metadata processor 412, network interface 413, and 3D model reconstruction 414 function are collectively referred to as a controller or a processor.

The following are examples of the functions of the anchoring metadata processor 412 shown in FIG. 4.
- Generation of content anchoring metadata: generates content anchoring metadata by analyzing the original contents 411 and transfers the generated content anchoring metadata to the AR terminal or client 400. The content anchoring metadata may be generated in real-time or may be generated by a separate device or function and be transferred to the anchoring metadata processor 412 depending on the configuration of the AR service.
- Generation of 3D model reconstruction parameter: generates content processing parameters for the 3D model reconstruction 414 of the original contents 411 using the received terminal anchoring metadata. Examples of content processing may include scaling, rotation, and translation, and the processing is applicable to individual virtual objects or the entire scene constituted of virtual objects. The terminal anchoring metadata may be received directly from the AR terminal requesting the service or may be obtained through a separate route.

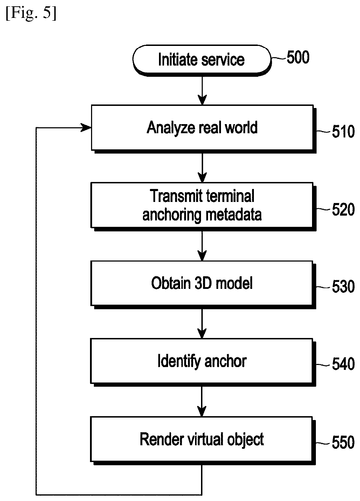

FIG. 5 illustrates a flowchart of a procedure for playing an AR service based on terminal anchoring metadata by an AR terminal according to an embodiment.

Referring to FIG. 5, at step 500, the AR terminal may initiate an AR service by executing an application program (or application), analyze the real world to generate terminal anchoring metadata at step 510, and transmit the generated terminal anchoring metadata to the AR server at step 520.

The AR server may analyze the terminal anchoring metadata to generate a 3D model and transmit the generated 3D model to the AR terminal. The AR terminal may obtain the 3D model from the AR server at step 530, determine at step 540 the anchor where the 3D model is to be positioned based on the result of the real world analysis at step 510, and render the virtual object represented as the 3D model at step 550.

Since the real world may be varied by the movement of the AR terminal or external factors, the position of the anchor may be changed or terminal anchoring metadata may be updated, if necessary, by continuously performing the real world analysis after the virtual object rendering at step 550.

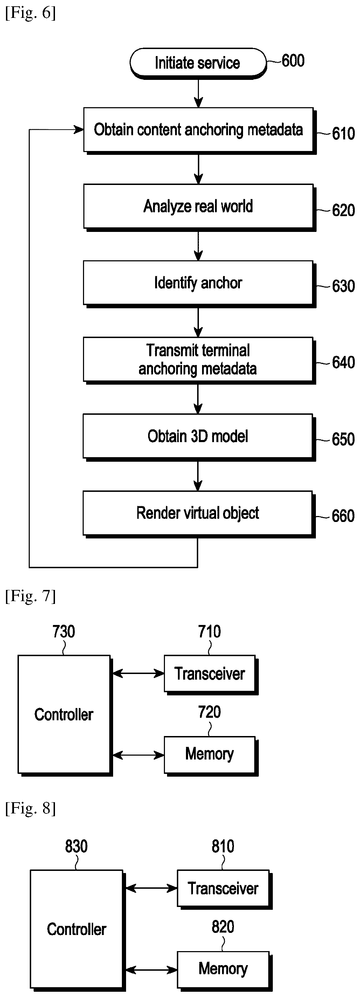

FIG. 6 illustrates a flowchart of a procedure for playing an AR service based on content anchoring metadata by an AR terminal according to an embodiment.

Referring to FIG. 6, at step 600, an AR terminal may initiate an AR service by executing an application program (or application) and obtain, at step 610, content anchoring metadata. Thereafter, at step 620, the AR terminal may analyze the real world, perform anchor identification at step 630 using the content anchoring metadata, generate the terminal anchoring metadata, and at step 640, transmit the terminal anchoring metadata to the AR server.

The AR server may analyze the terminal anchoring metadata to generate a 3D model and transmit the generated 3D model to the AR terminal. The AR terminal may obtain, at step 650, the 3D model from the AR server and render, at step 660, the virtual object represented as the 3D model based on the real world analysis at step 620 and the anchor identification at step 630. Since the real world may be varied by the movement of the AR terminal or external factors, the position of the anchor may be changed or terminal anchoring metadata may be updated, if necessary, by continuously performing the real world analysis after the virtual object rendering at step 660.

In the above-described AR terminal content anchoring metadata-based AR service reproduction procedure, the process of anchor identification at step 630 may extract one or more anchor candidate groups in which case the final anchor determination may be additionally performed after the 3D model is obtained at step 650). Further, the content anchoring metadata may be updated by the AR service provider and, in this case, the process after step 610 of obtaining the content anchoring metadata may be repeated.

According to an implementation, the AR terminal may generate terminal anchoring metadata by performing real world analysis before obtaining content anchoring metadata and select content anchoring metadata matching it, and perform the subsequent processes.

FIG. 7 illustrates a block diagram of a structure of a terminal according to an embodiment.

The terminal described above in connection with FIGS. 1 to 6 may correspond to the terminal of FIG. 7. Referring to FIG. 7, the terminal may include a transceiver 710, a memory 720, and a controller 730. The transceiver 710, controller 730, and memory 720 of the terminal may operate according to the above-described communication methods by the terminal. However, the components of the terminal are not limited thereto. For example, the terminal may include more or fewer components than the above-described components. The transceiver 710, the controller 730, and the memory 720 may be implemented in the form of a single chip. The controller 730 may include one or more processors.

The transceiver 710 collectively refers to a transmitter and a receiver of the terminal and may transmit and receive signals to/from a base station, network entity, server, or another terminal. The signals transmitted and received to/from the base station, network entity, server, or the other terminal may include control information and data. To that end, the transceiver 710 may include a radio frequency (RF) transmitter for frequency-up converting and amplifying signals transmitted and an RF receiver for low-noise amplifying signals received and frequency-down converting the frequency of the received signals. However, this is merely an example of the transceiver 710, and the components of the transceiver 710 are not limited to the RF transmitter and the RF receiver.

The transceiver 710 may receive signals via a radio channel, output the signals to the controller 730, and transmit signals output from the controller 730 via a radio channel.

The memory 720 may store programs and data necessary for the operation of the terminal. The memory 720 may store control information or data that is included in the signal obtained by the terminal. The memory 720 may include a storage medium, such as ROM, RAM, hard disk, CD-ROM, and DVD, or a combination of storage media. Rather than being separately provided, the memory 720 may be embedded in the controller 730.

The controller 730 may control a series of processes for the terminal to be able to operate according to the above-described embodiments. For example, the controller 730 may generate terminal anchoring metadata based on environment information obtained from at least one sensor included in a terminal, transmit the terminal anchoring metadata to a server, receive, from the server, a 3D model generated based on the terminal anchoring metadata, and render a virtual object based on the 3D model and the environment information. There may be provided a plurality of controllers 730. The controller 730 may control the components of the terminal by executing a program stored in the memory 720.

FIG. 8 illustrates a block diagram of a structure of a server according to an embodiment.

The server described above in connection with FIGS. 1 to 6 may correspond to the server of FIG. 8. Referring to FIG. 8, the server may include a transceiver 810, a memory 820, and a controller 830. The transceiver 810, controller 830, and memory 820 of the server may operate according to the above-described communication methods by the server. However, the components of the server are not limited thereto. For example, the server may include more or fewer components than the above-described components. The transceiver 810, the controller 830, and the memory 820 may be implemented in the form of a single chip. The controller 830 may include one or more processors.

The transceiver 810 collectively refers to the transmitter of the server and the receiver of the server and may transmit and receive signals to/from the terminal, base station, or network entity. The signals transmitted/received with the terminal, base station, or network entity may include control information and data. To that end, the transceiver 810 may include an RF transmitter for frequency-up converting and amplifying signals transmitted and an RF receiver for low-noise amplifying signals received and frequency-down converting the frequency of the received signals. However, this is merely an example of the transceiver 810, and the components of the transceiver 810 are not limited to the RF transmitter and the RF receiver.

The transceiver 810 may receive signals via a radio channel, output the signals to the controller 830, and transmit signals output from the controller 830 via a radio channel.

The memory 820 may store programs and data necessary for the operation of the server. The memory 820 may store control information or data that is included in the signal obtained by the server. The memory 820 may include a storage medium, such as ROM, RAM, hard disk, CD-ROM, and DVD, or a combination of storage media. Rather than being separately provided, the memory 820 may be embedded in the controller 830.

The controller 830 may control a series of processes for the server to be able to operate according to the above-described embodiments. For example, the controller 830 may control to receive, from a terminal, terminal anchoring metadata generated based on environment information obtained from at least one sensor included in a terminal, generate a 3D model using the terminal anchoring metadata, and control to transmit the 3D model to the terminal. In this case, a virtual object may be rendered by the terminal based on the 3D model and the environment information. There may be provided a plurality of controllers 830. The controller 830 may control the components of the server by executing a program stored in the memory 820.

The methods according to the embodiments described in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, ROMs, electrically erasable programmable read-only memories (EEPROMs), magnetic disc storage devices, compact-disc ROMs, digital versatile discs DVDs), or other types of optical storage devices, or magnetic cassettes. Or, the programs may be stored in a memory constituted of a combination of all or some thereof. As each constituting memory, multiple ones may be included.

The programs may be stored in attachable storage devices that may be accessed via a communication network, such as the Internet, Intranet, local area network (LAN), wide area network (WAN), or storage area network (SAN) or a communication network configured of a combination thereof. The storage device may connect to the device that performs embodiments of the disclosure via an external port. A separate storage device over the communication network may be connected to the device that performs embodiments of the disclosure.

In the above-described specific embodiments, the components included in the disclosure are represented in singular or plural forms depending on specific embodiments proposed. However, the singular or plural forms are selected to be adequate for contexts suggested for ease of description, and the disclosure is not limited to singular or plural components. As used herein, the singular forms "a," "an," and "the" are intended to include the plural forms as well, unless the context clearly indicates otherwise.

Although specific embodiments of the disclosure have been described above, various changes may be made thereto without departing from the scope of the disclosure. Thus, the scope of the disclosure should not be limited to the above-described embodiments, and should rather be defined by the following claims.

## Claims

1. A method for operating a terminal (200, 300, 400) for an augmented reality, AR, service in a mobile communication system, the method comprising:
generating terminal anchoring metadata based on environment information obtained from at least one sensor included in the terminal (200, 300, 400), wherein the terminal anchoring metadata includes a position and direction of the terminal (200, 300, 400) and a display resolution corresponding to a region of interest;
transmitting, to a server (210, 310, 410), the terminal anchoring metadata;
receiving, from the server (210, 310, 410), a three-dimensional, 3D, model generated based on the terminal anchoring metadata, wherein the 3D model includes a continuous volumetric frame that changes over time and the volumetric frame includes a set of primitive elements, such as points, lines and planes, existing in a 3D space at a specific time; and
rendering a virtual object based on the 3D model and the environment information.

2. The method of claim 1, further comprising:
determining an anchor where the 3D model is to be positioned based on the 3D model and the environment information.

3. The method of claim 1, wherein the terminal anchoring metadata further includes at least one of a geometry of an environment where the terminal (200, 300, 400) is located, coordinate information on the location of the terminal (200, 300, 400), a display resolution of the terminal (200, 300, 400), position information on the anchor, attribute information on the anchor, or information on content processing required for anchoring.

4. The method of claim 1, further comprising:
receiving, from the server (210, 310, 410), content anchoring metadata including at least one of space information on a scene representing AR content, space information on each virtual object constituting the scene, an anchor requirement, direction information on the scene and the virtual object, and possible content processing information.

5. A method for operating a server (210, 310, 410) for an augmented reality, AR, service in a mobile communication system, the method comprising:
receiving, from a terminal (200, 300, 400), terminal anchoring metadata generated based on environment information obtained from at least one sensor included in the terminal (200, 300, 400), wherein the terminal anchoring metadata includes a position and direction of the terminal (200, 300, 400) and a display resolution corresponding to a region of interest;
generating a three-dimensional, 3D, model using the terminal anchoring metadata, wherein the 3D model includes a continuous volumetric frame that changes over time and the volumetric frame includes a set of primitive elements, such as points, lines and planes, existing in a 3D space at a specific time; and
transmitting, to the terminal (200, 300, 400), the 3D model.

6. The method of claim 5, wherein the terminal anchoring metadata further includes at least one of a geometry of an environment where the terminal (200, 300, 400) is located, coordinate information on the location of the terminal (200, 300, 400), a display resolution of the terminal (200, 300, 400), position information on the anchor, attribute information on the anchor, or information on content processing required for anchoring.

7. The method of claim 5, further comprising:
generating content anchoring metadata including at least one of space information on a scene representing AR content, space information on each virtual object constituting the scene, an anchor requirement, orientation information on the scene and the virtual object, and possible content processing information; and
transmitting, to the terminal (200, 300, 400), the content anchoring metadata.

8. A terminal (200, 300, 400) for an augmented reality, AR, service in a mobile communication system, comprising:
a transceiver (710); and
a controller (730) coupled with the transceiver (710) and configured to:
generate terminal anchoring metadata based on environment information obtained from at least one sensor included in the terminal (200, 300, 400), wherein the terminal anchoring metadata includes a position and direction of the terminal (200, 300, 400) and a display resolution corresponding to a region of interest,
transmit, to a server (210, 310, 410), the terminal anchoring metadata,
receive, from the server (210, 310, 410), a three-dimensional, 3D, model generated based on the terminal anchoring metadata, wherein the 3D model includes a continuous volumetric frame that changes over time and the volumetric frame includes a set of primitive elements, such as points, lines and planes, existing in a 3D space at a specific time, and
render a virtual object based on the 3D model and the environment information.

9. The terminal (200, 300, 400) of claim 8, wherein the controller (730) is further configured to determine an anchor where the 3D model is to be positioned based on the 3D model and the environment information.

10. The terminal (200, 300, 400) of claim 8, wherein the terminal anchoring metadata further includes at least one of a geometry of an environment where the terminal (200, 300, 400) is located, coordinate information on the location of the terminal (200, 300, 400), a display resolution of the terminal (200, 300, 400), position information on the anchor, attribute information on the anchor, or information on content processing required for anchoring.

11. The terminal (200, 300, 400) of claim 8, wherein the controller (730) is further configured to receive, from the server (210, 310, 410), content anchoring metadata including at least one of space information on a scene representing AR content, space information on each virtual object constituting the scene, an anchor requirement, orientation information on the scene and the virtual object, and possible content processing information.

12. A server (210, 310, 410) for an augmented reality, AR, service in a mobile communication system, comprising:
a transceiver (810); and
a controller (830) coupled with the transceiver (810) and configured to:
receive, from a terminal (200, 300, 400), terminal anchoring metadata generated based on environment information obtained from at least one sensor included in the terminal (200, 300, 400), wherein the terminal anchoring metadata includes a position and direction of the terminal (200, 300, 400) and a display resolution corresponding to a region of interest,
generate a three-dimensional, 3D, model using the terminal anchoring metadata, wherein the 3D model includes a continuous volumetric frame that changes over time and the volumetric frame includes a set of primitive elements, such as points, lines and planes, existing in a 3D space at a specific time, and
transmit, to the terminal (200, 300, 400), the 3D model.

13. The server (210, 310, 410) of claim 12, wherein the terminal anchoring metadata further includes at least one of a geometry of an environment where the terminal (200, 300, 400) is located, coordinate information on the location of the terminal (200, 300, 400), a display resolution of the terminal (200, 300, 400), position information on the anchor, attribute information on the anchor, or information on content processing required for anchoring.

14. The server (210, 310, 410) of claim 12, wherein the controller (830) is further configured to:
generate content anchoring metadata including at least one of space information on a scene representing AR content, space information on each virtual object constituting the scene, an anchor requirement, direction information on the scene and the virtual object, and possible content processing information, and
transmit, to the terminal (200, 300, 400), the content anchoring metadata.

## Patentansprüche

1. Verfahren zum Betreiben eines Endgerätes (200, 300, 400) für einen Dienst für erweiterte Realität, AR, in einem Mobilkommunikationssystem, wobei das Verfahren Folgendes umfasst:
Erzeugen von Endgerätverankerungsmetadaten basierend auf Umgebungsinformationen, die von mindestens einem in dem Endgerät (200, 300, 400) enthaltenen Sensor erhalten werden, wobei die Endgerätverankerungsmetadaten eine Position und Richtung des Endgerätes (200, 300, 400) und eine Anzeigeauflösung beinhalten, die einem Bereich von Interesse entspricht;
Übertragen, an einen Server (210, 310, 410), der Endgerätverankerungsmetadaten;
Empfangen, von dem Server (210, 310, 410), eines dreidimensionalen, 3D, Modells, das basierend auf den Endgerätverankerungsmetadaten erzeugt wurde, wobei das 3D-Modell einen kontinuierlichen volumetrischen Rahmen beinhaltet, der sich im Zeitverlauf ändert, und der volumetrische Rahmen einen Satz primitiver Elemente, wie Punkte, Linien und Ebenen, beinhaltet, die zu einer spezifischen Zeit in einem 3D-Raum existieren; und
Rendern eines virtuellen Objekts basierend auf dem 3D-Modell und den Umgebungsinformationen.

2. Verfahren nach Anspruch 1, ferner umfassend:
Bestimmen eines Ankers, an dem das 3D-Modell positioniert werden soll, basierend auf dem 3D-Modell und den Umgebungsinformationen.

3. Verfahren nach Anspruch 1, wobei die Endgerätverankerungsmetadaten ferner mindestens eines von einer Geometrie einer Umgebung, in der sich das Endgerät (200, 300, 400) befindet, Koordinateninformationen über den Standort des Endgerätes (200, 300, 400), einer Anzeigeauflösung des Endgerätes (200, 300, 400), Positionsinformationen über den Anker, Attributinformationen über den Anker oder Informationen über eine für die Verankerung erforderliche Inhaltsverarbeitung beinhalten.

4. Verfahren nach Anspruch 1, ferner umfassend:
Empfangen, von dem Server (210, 310, 410), von Inhaltsverankerungsmetadaten, die mindestens eines von Rauminformationen über eine Szene, die AR-Inhalt darstellt, Rauminformationen über jedes virtuelle Objekt, das die Szene bildet, einer Ankeranforderung, Richtungsinformationen über die Szene und das virtuelle Objekt und möglichen Inhaltsverarbeitungsinformationen beinhalten.

5. Verfahren zum Betreiben eines Servers (210, 310, 410) für einen Dienst für erweiterte Realität, AR, in einem Mobilkommunikationssystem, wobei das Verfahren Folgendes umfasst:
Empfangen, von einem Endgerät (200, 300, 400) von Endgerätverankerungsmetadaten, die basierend auf Umgebungsinformationen erzeugt werden, die von mindestens einem in dem Endgerät (200, 300, 400) enthaltenen Sensor erhalten werden, wobei die Endgerätverankerungsmetadaten eine Position und Richtung des Endgerätes (200, 300, 400) und eine Anzeigeauflösung beinhalten, die einem Bereich von Interesse entspricht;
Erzeugen eines dreidimensionalen, 3D, Modells unter Verwendung der Endgerätverankerungsmetadaten, wobei das 3D-Modell einen kontinuierlichen volumetrischen Rahmen beinhaltet, der sich im Zeitverlauf ändert, und der volumetrische Rahmen einen Satz primitiver Elemente, wie Punkte, Linien und Ebenen, beinhaltet, die zu einer spezifischen Zeit in einem 3D-Raum existieren; und
Übertragen, an das Endgerät (200, 300, 400), des 3D-Modells.

6. Verfahren nach Anspruch 5, wobei die Endgerätverankerungsmetadaten ferner mindestens eines von einer Geometrie einer Umgebung, in der sich das Endgerät (200, 300, 400) befindet, Koordinateninformationen über den Standort des Endgerätes (200, 300, 400), einer Anzeigeauflösung des Endgerätes (200, 300, 400), Positionsinformationen über den Anker, Attributinformationen über den Anker oder Informationen über eine für die Verankerung erforderliche Inhaltsverarbeitung beinhalten.

7. Verfahren nach Anspruch 5, ferner umfassend:
Erzeugen von Inhaltsverankerungsmetadaten, die mindestens eines von Rauminformationen über eine Szene, die AR-Inhalt darstellt, Rauminformationen über jedes virtuelle Objekt, das die Szene bildet, einer Ankeranforderung, Orientierungsinformationen über die Szene und das virtuelle Objekt und möglichen Inhaltsverarbeitungsinformationen beinhalten; und
Übertragen, an das Endgerät (200, 300, 400), der Inhaltsverankerungsmetadaten.

8. Endgerät (200, 300, 400) für einen Dienst für erweiterte Realität, AR, in einem Mobilkommunikationssystem, umfassend:
einen Transceiver (710); und
eine Steuerung (730), die mit dem Transceiver (710) gekoppelt ist und konfiguriert ist zum:
Erzeugen von Endgerätverankerungsmetadaten basierend auf Umgebungsinformationen, die von mindestens einem in dem Endgerät (200, 300, 400) enthaltenen Sensor erhalten werden, wobei die Endgerätverankerungsmetadaten eine Position und Richtung des Endgerätes (200, 300, 400) und eine Anzeigeauflösung beinhalten, die einem Bereich von Interesse entspricht,
Übertragen, an einen Server (210, 310, 410), der Endgerätverankerungsmetadaten,
Empfangen, von dem Server (210, 310, 410), eines dreidimensionalen, 3D, Modells, das basierend auf den Endgerätverankerungsmetadaten erzeugt wurde, wobei das 3D-Modell einen kontinuierlichen volumetrischen Rahmen beinhaltet, der sich im Zeitverlauf ändert, und der volumetrische Rahmen einen Satz primitiver Elemente, wie Punkte, Linien und Ebenen, beinhaltet, die zu einer spezifischen Zeit in einem 3D-Raum existieren, und
Rendern eines virtuellen Objekts basierend auf dem 3D-Modell und den Umgebungsinformationen.

9. Endgerät (200, 300, 400) nach Anspruch 8, wobei die Steuerung (730) ferner konfiguriert ist, um einen Anker, an dem das 3D-Modell positioniert werden soll, basierend auf dem 3D-Modell und den Umgebungsinformationen zu bestimmen.

10. Endgerät (200, 300, 400) nach Anspruch 8, wobei die Endgerätverankerungsmetadaten ferner mindestens eines von einer Geometrie einer Umgebung, in der sich das Endgerät (200, 300, 400) befindet, Koordinateninformationen über den Standort des Endgerätes (200, 300, 400), einer Anzeigeauflösung des Endgerätes (200, 300, 400), Positionsinformationen über den Anker, Attributinformationen über den Anker oder Informationen über eine für die Verankerung erforderliche Inhaltsverarbeitung beinhalten.

11. Endgerät (200, 300, 400) nach Anspruch 8, wobei die Steuerung (730) ferner konfiguriert ist zum Empfangen, von dem Server (210, 310, 410) von Inhaltsverankerungsmetadaten, die mindestens eines von Rauminformationen über eine Szene, die AR-Inhalt darstellt, Rauminformationen über jedes virtuelle Objekt, das die Szene bildet, einer Ankeranforderung, Orientierungsinformationen über die Szene und das virtuelle Objekt und möglichen Inhaltsverarbeitungsinformationen beinhalten.

12. Server (210, 310, 410) für einen Dienst für erweiterte Realität, AR, in einem Mobilkommunikationssystem, umfassend:
einen Transceiver (810); und
eine Steuerung (830), die mit dem Transceiver (810) gekoppelt ist und konfiguriert ist zum:
Empfangen, von einem Endgerät (200, 300, 400) von Endgerätverankerungsmetadaten, die basierend auf Umgebungsinformationen erzeugt werden, die von mindestens einem in dem Endgerät (200, 300, 400) enthaltenen Sensor erhalten werden, wobei die Endgerätverankerungsmetadaten eine Position und Richtung des Endgerätes (200, 300, 400) und eine Anzeigeauflösung beinhalten, die einem Bereich von Interesse entspricht,
Erzeugen eines dreidimensionalen, 3D, Modells unter Verwendung der Endgerätverankerungsmetadaten, wobei das 3D-Modell einen kontinuierlichen volumetrischen Rahmen beinhaltet, der sich im Zeitverlauf ändert, und der volumetrische Rahmen einen Satz primitiver Elemente, wie Punkte, Linien und Ebenen, beinhaltet, die zu einer spezifischen Zeit in einem 3D-Raum existieren, und
Übertragen, an das Endgerät (200, 300, 400), des 3D-Modells.

13. Server (210, 310, 410) nach Anspruch 12, wobei die Endgerätverankerungsmetadaten ferner mindestens eines von einer Geometrie einer Umgebung, in der sich das Endgerät (200, 300, 400) befindet, Koordinateninformationen über den Standort des Endgerätes (200, 300, 400), einer Anzeigeauflösung des Endgerätes (200, 300, 400), Positionsinformationen über den Anker, Attributinformationen über den Anker oder Informationen über eine für die Verankerung erforderliche Inhaltsverarbeitung beinhalten.

14. Server (210, 310, 410) nach Anspruch 12, wobei die Steuerung (830) ferner konfiguriert ist zum:
Erzeugen von Inhaltsverankerungsmetadaten, die mindestens eines von Rauminformationen über eine Szene, die AR-Inhalt darstellt, Rauminformationen über jedes virtuelle Objekt, das die Szene bildet, einer Ankeranforderung, Richtungsinformationen über die Szene und das virtuelle Objekt und möglichen Inhaltsverarbeitungsinformationen beinhalten, und
Übertragen, an das Endgerät (200, 300, 400), der Inhaltsverankerungsmetadaten.

## Revendications

1. Procédé pour faire fonctionner un terminal (200, 300, 400) pour un service de réalité augmentée, AR, dans un système de communication mobile, le procédé comprenant :
générer des métadonnées d'ancrage de terminal sur la base d'informations d'environnement obtenues à partir d'au moins un capteur inclus dans le terminal (200, 300, 400), dans lequel les métadonnées d'ancrage de terminal comprennent une position et une direction du terminal (200, 300, 400) et une résolution d'affichage correspondant à une région d'intérêt ;
transmettre, à un serveur (210, 310, 410), les métadonnées d'ancrage de terminal ;
recevoir, depuis le serveur (210, 310, 410), un modèle tridimensionnel, 3D, généré sur la base des métadonnées d'ancrage de terminal, dans lequel le modèle 3D comprend un cadre volumétrique continu qui change au fil du temps et le cadre volumétrique comprend un ensemble d'éléments primitifs, tels que des points, des lignes et des plans, existant dans un espace 3D à un temps spécifique ; et
rendre un objet virtuel sur la base du modèle 3D et les informations d'environnement.

2. Procédé de la revendication 1, comprenant en outre :
déterminer un ancre où le modèle 3D doit être positionné en se basant sur le modèle 3D et les informations d'environnement.

3. Procédé de la revendication 1, dans lequel les métadonnées d'ancrage de terminal comprennent en outre au moins une parmi une géométrie d'un environnement où le terminal (200, 300, 400) est situé, des informations de coordonnées sur le lieu du terminal (200, 300, 400), une résolution d'affichage du terminal (200, 300, 400), des informations de position sur l'ancre, des informations d'attributs sur l'ancre, ou des informations sur le traitement de contenu requis pour l'ancrage.

4. Procédé de la revendication 1, comprenant en outre :
recevoir, depuis le serveur (210, 310, 410), des métadonnées d'ancrage de contenu comprenant au moins une d'informations d'espace sur une scène représentant le contenu AR, d'informations d'espace sur chaque objet virtuel constituant la scène, une exigence d'ancre, des informations de direction sur la scène et l'objet virtuel, et d'éventuelles informations de traitement de contenu.

5. Procédé de fonctionnement d'un serveur (210, 310, 410) pour un service de réalité augmentée, AR, dans un système de communication mobile, le procédé comprenant :
recevoir, depuis un terminal (200, 300, 400), des métadonnées d'ancrage de terminal générées sur la base d'informations d'environnement obtenues à partir d'au moins un capteur inclus dans le terminal (200, 300, 400), dans lequel les métadonnées d'ancrage de terminal comprennent une position et une direction du terminal (200, 300, 400) et une résolution d'affichage correspondant à une région d'intérêt ;
générer un modèle tridimensionnel, 3D, en utilisant les métadonnées d'ancrage de terminal, dans lequel le modèle 3D comprend un cadre volumétrique continu qui change au fil du temps et le cadre volumétrique comprend un ensemble d'éléments primitifs, tels que des points, des lignes et des plans, existant dans un espace 3D à un niveau spécifique ; et
transmettre, au terminal (200, 300, 400), le modèle 3D.

6. Procédé de la revendication 5, dans lequel les métadonnées d'ancrage de terminal comprennent en outre au moins une parmi une géométrie d'un environnement où le terminal (200, 300, 400) est situé, des informations de coordonnées sur le lieu du terminal (200, 300, 400), une résolution d'affichage du terminal (200, 300, 400), des informations de position sur l'ancre, des informations d'attributs sur l'ancre, ou des informations sur le traitement de contenu requis pour l'ancrage.

7. Procédé de la revendication 5, comprenant en outre :
générer des métadonnées d'ancrage de contenu comprenant au moins une d'informations d'espace sur une scène représentant le contenu AR, d'informations d'espace sur chaque objet virtuel constituant la scène, une exigence d'ancre, des informations d'orientation sur la scène et l'objet virtuel, et d'éventuelles informations de traitement de contenu; et
transmettre, au terminal (200, 300, 400), les métadonnées d'ancrage de contenu.

8. Terminal (200, 300, 400) pour un service de réalité augmentée, AR, dans un système de communication mobile, comprenant :
un émetteur-récepteur (710) ; et
une commande (730), couplée à l'émetteur-récepteur (710) et configurée pour :
générer des métadonnées d'ancrage de terminal sur la base d'informations d'environnement obtenues à partir d'au moins un capteur inclus dans le terminal (200, 300, 400), dans lequel les métadonnées d'ancrage de terminal comprennent une position et une direction du terminal (200, 300, 400) et une résolution d'affichage correspondant à une région d'intérêt,
transmettre, à un serveur (210, 310, 410), les métadonnées d'ancrage de terminal,
recevoir, depuis le serveur (210, 310, 410), un modèle tridimensionnel, 3D, généré sur la base des métadonnées d'ancrage de terminal, où le modèle 3D comprend un cadre volumétrique continu qui change au fil du temps et le cadre volumétrique comprend un ensemble d'éléments primitifs, tels que des points, des lignes et des plans, existant dans un espace 3D à un niveau spécifique, et
restituer un objet virtuel en se basant sur le modèle 3D et les informations d'environnement.

9. Terminal (200, 300, 400) de la revendication 8, dans lequel la commande (730) est en outre configurée pour commander un ancre où le modèle 3D doit être positionné en se basant sur le modèle 3D et les informations d'environnement.

10. Terminal (200, 300, 400) de la revendication 8, dans lequel les métadonnées d'ancrage de terminal comprennent en outre au moins une parmi une géométrie d'un environnement où le terminal (200, 300, 400) est situé, des informations de coordonnées sur le lieu du terminal (200, 300, 400), une résolution d'affichage du terminal (200, 300, 400), des informations de position sur l'ancre, des informations d'attributs sur l'ancre, ou des informations sur le traitement de contenu requis pour l'ancrage.

11. Terminal (200, 300, 400) de la revendication 8, dans lequel la commande (730) est en outre configurée pour recevoir, depuis le serveur (210, 310, 410), des métadonnées d'ancrage de contenu comprenant au moins une d'informations d'espace sur une scène représentant le contenu AR, d'informations d'espace sur chaque objet virtuel constituant la scène, d'une exigence d'ancre, d'informations d'orientation sur la scène et l'objet virtuel, et d'éventuelles informations de traitement de contenu.

12. Serveur (210, 310, 410) pour un service de réalité augmentée, AR, dans un système de communication mobile, comprenant :
un émetteur-récepteur (810) ; et
une commande (830), couplée à l'émetteur-récepteur (810) et configurée pour :
recevoir, depuis un terminal (200, 300, 400), des métadonnées d'ancrage de terminal générées sur la base d'informations d'environnement obtenues à partir d'au moins un capteur inclus dans le terminal (200, 300, 400), dans lequel les métadonnées d'ancrage de terminal comprennent une position et une direction du terminal (200, 300, 400) et une résolution d'affichage correspondant à une région d'intérêt,
générer un modèle tridimensionnel, 3D, en utilisant les métadonnées d'ancrage de terminal, dans lequel le modèle 3D comprend un cadre volumétrique continu qui change au fil du temps et le cadre volumétrique comprend un ensemble d'éléments primitifs, tels que des points, des lignes et des plans, existant dans un espace 3D à un niveau spécifique, et
transmettre, au terminal (200, 300, 400), le modèle 3D.

13. Serveur (210, 310, 410) de la revendication 12, dans lequel les métadonnées d'ancrage de terminal comprennent en outre au moins une parmi une géométrie d'un environnement où le terminal (200, 300, 400) est situé, des informations de coordonnées sur le lieu du terminal (200, 300, 400), une résolution d'affichage du terminal (200, 300, 400), des informations de position sur l'ancre, des informations d'attributs sur l'ancre, ou des informations sur le traitement de contenu requis pour l'ancrage.

14. Serveur (210, 310, 410) de la revendication 12, dans lequel la commande (830) est en outre configurée pour :
générer des métadonnées d'ancrage de contenu comprenant au moins une d'informations d'espace sur une scène représentant le contenu AR, d'informations d'espace sur chaque objet virtuel constituant la scène, une exigence d'ancre, des informations d'orientation sur la scène et l'objet virtuel, et d'éventuelles informations de traitement de contenu, et
transmettre, au terminal (200, 300, 400), les métadonnées d'ancrage de contenu.
